# EUROPEAN PATENT APPLICATION

(11) **EP 4 517 890 A1**
(43) Date of publication of application: **05.03.2025**
(21) Application number: 22950683.7
(22) Date of filing: 15.07.2022
(51) Int. Cl.: H01M 10/04

(54) **SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: SUN, Jingxuan, Ningde, Fujian 352100 (CN); LIU, Qian, Ningde, Fujian 352100 (CN); LI, Quanguo, Ningde, Fujian 352100 (CN); YE, Yonghuang, Ningde, Fujian 352100 (CN); XIAO, Dejun, Ningde, Fujian 352100 (CN); CHEN, Jiahua, Ningde, Fujian 352100 (CN); YU, Chunpeng, Ningde, Fujian 352100 (CN)
(74) Representative: Gong, Jinping
(86) International application number: PCT/CN2022/105914
(87) International publication number: WO 2024/011563

(57) **Abstract**

The present application provides a secondary battery, a battery module, a battery pack and a power consuming device, and the secondary battery comprises a positive electrode plate and a negative electrode plate, wherein the positive electrode plate comprises a positive electrode current collector and a positive electrode active layer loaded on the surface of the positive electrode current collector, and the negative electrode plate comprises a negative electrode current collector and a negative electrode active layer loaded on the surface of the negative electrode current collector; wherein the positive electrode active layer has a compacted density of A1 g/cm³ and a porosity of B1, and 1.8 ≤ A1/B1 ≤ 12; and the positive electrode active layer has a compacted density of A2 g/cm³ and a porosity of B2, and 1 ≤ A2/B2 ≤ 8. The secondary battery has a low expansion rate and excellent cycling performance.

## Description

### Technical Field

The present application relates to the field of batteries, and specifically to a secondary battery, a battery module, a battery pack and a power consuming device.

### Background Art

Secondary batteries are increasingly widely used due to their clean and renewable characteristics, and in order to meet the requirements of different environments and application, the performance requirements of secondary batteries in the industry are constantly improving. In recent years, with the rapid development of the new energy industry, people have higher and higher demand for new energy vehicles such as electric vehicles and electric bicycles, and the requirements for their performance are getting higher and higher. Secondary batteries are an important source of power for electric vehicles. Therefore, people have higher and higher performance requirements for secondary batteries.

Secondary batteries such as sodium ion batteries and lithium ion batteries are mainly composed of a positive electrode, a negative electrode, a separator, an electrolyte solution, and a housing, and are mainly rely on the movement of lithium ions or sodium ions between the positive and negative electrodes to generate electrical energy. When charging, lithium ions or sodium ions are deintercalated from the positive electrode and then intercalated into the negative electrode through the electrolyte, and the contrary case occurs when discharging. Lithium ion batteries have the advantages of high energy density, small self-discharge, and excellent cycling performance. Sodium ion batteries have the advantages of high safety performance, excellent low-temperature performance, and high fast charging rate.

However, secondary batteries such as lithium ion batteries and sodium ion batteries have the problem of volume expansion during charging and discharging, which seriously prevents the improvement of the cycling performance of secondary batteries.

### Summary of the Invention

In view of the above problems, the present application provides a secondary battery, a battery module, a battery pack and a power consuming device, aiming at reducing the volume expansion rate of the secondary battery and improving the cycling performance thereof.

In order to achieve the above objective, a first aspect of the present application provides a secondary battery, comprising a positive electrode plate and a negative electrode plate, wherein the positive electrode plate comprises a positive electrode active layer, and the negative electrode plate comprises a negative electrode active layer;
wherein the positive electrode active layer has a compacted density of A1 g/cm³ and a porosity of B1, and the positive electrode active layer satisfies: 1.8 ≤ A1/B1 ≤ 12; and
the negative electrode active layer has a compacted density of A2 g/cm³ and a porosity of B2, and the negative electrode active layer satisfies: 1 ≤ A2/B2 ≤ 8.

In the secondary battery described above, by controlling the ratio of the compacted density to the porosity of the positive electrode plate and the ratio of the compacted density to the porosity of the negative electrode plate within a specific range, it is possible to reduce the thickness deformation of the positive electrode plate and the negative electrode plate caused by the expansion during charging and discharging cycles, that is, the thickness rebound rate of the positive electrode plate and the negative electrode plate during charging and discharging cycles is reduced, thereby reducing the volume expansion rate of the secondary battery, while allowing the electrode plate to have good infiltration by the electrolyte solution, and further improving the cycling performance of the secondary battery.

In any embodiment of the present application, the positive electrode active layer satisfies: 2 ≤ A1/B1 ≤ 10, and the negative electrode active layer satisfies: 1.2 ≤ A2/B2 ≤ 7.

In any embodiment of the present application, 1.1 ≤ A1 ≤ 3.6;
optionally, 1.2 ≤ A1 ≤ 3.6.

In any embodiment of the present application, 10% ≤ B1 ≤ 60%;
optionally, 20% ≤ B1 ≤ 50%.

In any embodiment of the present application, 0.7 ≤ A2 ≤ 1.3;
optionally, 0.8 ≤ A2 ≤ 1.3.

In any embodiment of the present application, 20% ≤ B2 ≤ 55%;
optionally, 20% ≤ B2 ≤ 50%.

In any embodiment of the present application, the positive electrode active layer has a cohesive force of 20 N/m - 600 N/m; and
the negative electrode active layer has a cohesive force of 50 N/m - 600 N/m.

In any embodiment of the present application, when the secondary battery is in an initial state, the positive electrode plate has a thickness of C1 µm and the negative electrode plate has a thickness of D1 µm, and when the secondary battery is in a 100% SOC state after being charged and discharged for 100 cycles at a rate of 1 C at 25°C, the positive electrode plate has a thickness of C2 µm and the negative electrode plate has a thickness of D2 µm.
the positive electrode plate has a thickness rebound rate T1 = (C2 - C1)/C1 × 100%, and the negative electrode plate has a thickness rebound rate T2 = (D2 - D1)/D1 × 100%; and
the thickness rebound rate T1 of the positive electrode plate satisfies: 0.1 % ≤ T1 ≤ 10%, and the thickness rebound rate T2 of the negative electrode plate satisfies: 0.5 % ≤ T2 ≤ 15%.

In any embodiment of the present application, the thickness rebound rate T1 of the positive electrode plate and the thickness rebound rate T2 of the negative electrode plate satisfy: 0.1 < T1/T2 < 2; and
optionally, the thickness rebound rate T1 of the positive electrode plate and the thickness rebound rate T2 of the negative electrode plate satisfy: 0.1 < T1/T2 < 1.5.

In any embodiment of the present application, the component of the positive electrode active layer comprises a positive electrode active material, and the mass proportion of the positive electrode active material in the positive electrode active layer is 50% - 99%; and
optionally, the mass proportion of the positive electrode active material in the positive electrode active layer is 70% - 98%.

In any embodiment of the present application, the positive electrode active material comprises at least one of a lithium ion positive electrode active material and a sodium ion positive electrode active material.

In any embodiment of the present application, the positive electrode active material comprises at least one of a sodium transition metal oxide, a polyanionic compound and a Prussian blue compound; and
optionally, the positive electrode active material comprises at least one of a sodium transition metal oxide and a polyanionic compound.

In any embodiment of the present application, the component of the negative electrode active layer comprises a negative electrode active material, and the mass proportion of the negative electrode active material in the negative electrode active layer is 85% - 99%; and
optionally, the mass proportion of the negative electrode active material in the negative electrode active layer is 90% - 99%.

In any embodiment of the present application, the negative electrode active material comprises at least one of mesocarbon microspheres, graphite, glassy carbon, carbon nanotubes, carbon-carbon composite materials, carbon fibers, hard carbon, soft carbon and alloy materials; and
optionally, the negative electrode active material comprises hard carbon.

In any embodiment of the present application, the component of the positive electrode active layer comprises a positive electrode binder, and the mass proportion of the positive electrode binder in the positive electrode active layer is 0.05% - 10%; and
optionally, the mass proportion of the positive electrode binder in the positive electrode active layer is 0.1%-8%.

In any embodiment of the present application, the component of the negative electrode active layer comprises a negative electrode binder, and the mass proportion of the negative electrode binder in the negative electrode active layer is 0.1% - 10%.

In any embodiment of the present application, the positive electrode active layer has a thickness of 5 µm - 300 µm; and
optionally, the positive electrode active layer has a thickness of 50 µm - 260 µm.

A second aspect of the present application provides a battery module comprising a secondary battery of the first aspect of the present application.

A third aspect of the present application provides a battery pack comprising a battery module of the second aspect of the present application.

A fourth aspect of the present application provides a power consuming device, comprising at least one of a secondary battery of the first aspect of the present application, a battery module of the second aspect of the present application and a battery pack of the third aspect of the present application.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
Fig. 1 is a schematic diagram of an embodiment of a secondary battery.
Fig. 2 is an exploded view of Fig. 1.
Fig. 3 is a schematic diagram of an embodiment of a battery module.
Fig. 4 is a schematic diagram of an embodiment of a battery pack.
Fig. 5 is an exploded view of Fig. 4.
Fig. 6 is a schematic diagram of an embodiment of a power consuming device using a secondary battery as a power source.

### List of reference numerals:

1. battery pack; 2. upper box body; 3. lower box body; 4 battery module; 5. secondary battery; 51. housing; 52. electrode assembly; 53. cover plate; 6. power consuming device.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of' means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

As mentioned in the background art, secondary batteries such as lithium ion batteries and sodium ion batteries have volume expansion effects during charging and discharging, that is, the volume of lithium ion batteries and sodium ion batteries expands during charging and discharging, which destroys the internal structure of the battery, thereby reducing the cycling performance of the battery. The electrode active material is a main component of the electrode plate of the battery, and is also a main factor that affects the performance of the secondary battery. Therefore, in the traditional technology, those skilled in the art focus on developing new active materials to reduce the volume expansion rate of the secondary battery during charging and discharging.

However, the development of new electrode active material is a difficult and slow process, and there has been no breakthrough so far. The technicians of the present application found in the practical production and research and development process of the battery that the reasons for the volume expansion effect of secondary batteries such as lithium ion batteries and sodium ion batteries during charging and discharging mainly lie in that: the electrode plates of a secondary battery will expand to result in thickness deformation during charging and discharging cycles. The greater the thickness change rate of the electrode plates before and after charging and discharging cycles, that is, the greater the rebound rate of the electrode plates, the greater the volume expansion rate of the battery and thus the worse the cycling performance.

Further, the technicians of the present application found by research that in general, the compacted density of the electrode plates is positively correlated with the thickness rebound rate of the electrode plates, and the porosity of the electrode plates is negatively correlated with the thickness rebound rate of the electrode plates, and the compacted density and porosity of the electrode plates will also affect the infiltration rate of the electrolyte solution, thus affecting the cycling performance of the battery.

On this basis, after a large number of exploratory experiments, the technicians of the present application creatively control the ratio of the compacted density to the porosity of the electrode plates in a specific range, so as to reduce the thickness rebound rate of the electrode plates and further reduce the volume expansion rate of the secondary battery, and at the same time allow the electrode plates to have good infiltration by the electrolyte solution, thus further improving the cycling performance of the secondary battery.

An embodiment of the present application provides a secondary battery, comprising a positive electrode plate and a negative electrode plate, wherein the positive electrode plate comprises a positive electrode active layer, and the negative electrode plate comprises a negative electrode active layer;
wherein the positive electrode active layer has a compacted density of A1 g/cm³ and a porosity of B1, and the positive electrode active layer satisfies: 1.8 ≤ A1/B1 ≤ 12; and
the negative electrode active layer has a compacted density of A2 g/cm³ and a porosity of B2, and the negative electrode active layer satisfies: 1 ≤ A2/B2 ≤ 8.

In the secondary battery described above, by controlling the ratio of the compacted density to the porosity of the positive electrode plate and the ratio of the compacted density to the porosity of the negative electrode plate within a specific range, it is possible to reduce the thickness deformation of the positive electrode plate and the negative electrode plate caused by expansion during the charging and discharging cycles, that is, the thickness rebound rate of the positive electrode plate and the negative electrode plate during the charging and discharging cycles is reduced, thereby reducing the volume expansion rate of the secondary battery, while allowing the electrode plate to have good infiltration by the electrolyte solution, and further improving the cycling performance of the secondary battery.

In the ranges of "1.8 ≤ A1/B1 ≤ 12" and "1 ≤ A2/B2 ≤ 8", the values of A1/B1 or *A2*/*B2* include the minimum and maximum values of the range, and each value between the minimum and maximum values. Specific examples of A1/B1 include, but are not limited to, the point values in the embodiments and: 1.8, 1.9, 2, 2.5, 3, 3.5, 4, 4.5, 5, 5.5, 6, 6.5, 7, 7.5, 8, 8.5, 8, 9.5, 10, 10.5, 11, 11.5, and 12; and specific examples of A2/B2 include, but are not limited to, the point values in the embodiments and: 1.2, 1.3, 1.5, 1.8, 2, 2.5, 3, 3.5, 4, 4.5, 5, 5.5, 6, 6.5, 7, 7.5, and 8.

In any embodiment of the present application, the positive electrode active layer satisfies: 2 ≤ A1/B1 ≤ 10, and the negative electrode active layer satisfies: 1.2 ≤ A2/B2 ≤ 7.

In any embodiment of the present application, 1.1 ≤ A1 ≤ 3.6;
optionally, 1.2 ≤ A1 ≤ 3.6.

In the range of "1.1 ≤ A1 ≤ 3.6", the values of A1 include the minimum and maximum values of the range, and each value between the minimum and maximum values. Specific examples of A1 include, but are not limited to, the point values in the embodiments and: 1.1, 1.2, 1.5, 1.8, 2, 2.1, 2.2, 2.3, 2.4, 2.5, 2.6, 2.7, 2.8, 2.9, 3, 3.1, 3.2, 3.3, 3.4, 3.5, and 3.6.

In any embodiment of the present application, 0.7 ≤ A2 ≤ 1.3;
optionally, 0.8 ≤ A2 ≤ 1.3.

In the range of "0.7 ≤ A2 ≤ 1.3", the values of A2 include the minimum and maximum values of the range, and each value between the minimum and maximum values. Specific examples of A2 include, but are not limited to, the point values in the embodiments and: 0.7, 0.8, 0.9, 1, 1.1, 1.2, and 1.3.

In any embodiment of the present application, 10% ≤ B1 ≤ 60%;
optionally, 20% ≤ B1 ≤ 50%.

In any embodiment of the present application, 20% ≤ B2 ≤ 55%;
optionally, 20% ≤ B2 ≤ 50%.

In general, the compacted density of the electrode plates is positively correlated with the thickness rebound rate of the electrode plates, and the porosity of the electrode plates is negatively correlated with the thickness rebound rate of the electrode plates. However, if the porosity of the electrode plates is too small, it may slow down the infiltration rate of the electrolyte solution in the secondary battery, which prevents the deintercalation and intercalation of active ions in the secondary battery during charging and discharging, and reduces the cycling performance of the secondary battery. Therefore, it is necessary to control the ratio of the compacted density to the porosity of the electrode plates in a specific range to further reduce the thickness rebound rate of the positive electrode plate and negative electrode plate during charging and discharging cycles, while improving the good infiltration of the electrode plates by the electrolyte solution to further improve the cycling performance of the secondary battery.

In the ranges of "20% ≤ B1 ≤ 50%" and "20% ≤ B2 ≤ 55%", the values of B1 and B2 include the minimum and maximum values of the range, and each value between the minimum and maximum values. Specific examples of B1 include, but are not limited to, the point values in the embodiments and: 20%, 21%, 22%, 23%, 24%, 25%, 26%, 27%, 28%, 29%, 30%, 31%, 31%, 32%, 33%, 34%, 35%, 36%, 37%, 38%, 39%, 40%, 41%, 42%, 43%, 44%, 45%, 46%, 47%, 48%, 49%, and 50%; Specific examples of B2 include, but are not limited to, the point values in the embodiments and: 20%, 21%, 22%, 23%, 24%, 25%, 26%, 27%, 28%, 29%, 30%, 31%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, and 55%.

In any embodiment of the present application, the positive electrode active layer has a cohesive force of 20 N/m - 600 N/m.

In any embodiment of the present application, the positive electrode active layer has a cohesive force of 100 N/m - 500 N/m.

In any embodiment of the present application, the positive electrode active layer has a cohesive force of 300 N/m - 500 N/m.

In any embodiment of the present application, the negative electrode active layer has a cohesive force of 50 N/m - 600 N/m.

In any embodiment of the present application, the negative electrode active layer has a cohesive force of 100 N/m - 600 N/m.

On the one hand, the cohesive force of the electrode plate has an influence on the thickness rebound rate of the electrode plate. In general, the cohesive force of the active layer of the electrode plate is negatively correlated with the thickness rebound rate of the electrode plate. On the other hand, if the cohesive force of the active layer of the electrode plate is too small, the interaction force between the components in the active layer will be reduced, which may cause the powder of the active layer to peel off, and then in turn reduce the cycling performance of the secondary battery. Therefore, by controlling the cohesive force of the negative electrode active layer or the positive electrode active layer within a specific range, the thickness rebound rate of the electrode plate can be further reduced and the cycling performance of the secondary battery can be improved.

In the range of "300 N/m - 500 N/m", the values of cohesive force include the minimum and maximum values of the range, and each value between the minimum and maximum values. Specific examples include, but are not limited to, the point values in the embodiments and: 300 N/m, 350 N/m, 400 N/m, 450 N/m, and 500 N/m.

Specifically, the method for testing the cohesive force of the positive electrode active layer and/or the negative electrode active layer comprises the following steps S10-S20.

Step S 10: a negative electrode plate or a positive electrode plate is fixed on a steel plate, and an adhesive tape is attached on the side of the negative electrode plate containing a negative electrode active layer or the side of the positive electrode plate containing a positive electrode active layer.

Specifically, a negative electrode plate or a positive electrode plate is fixed on a steel plate by double-sided tape, that is, one side of the double-sided tape is attached to a side of the negative electrode plate or the positive electrode plate, and the other side of the double-sided tape is attached to the steel plate, so that the negative electrode plate or the positive electrode plate is fixed on the steel plate.

In addition, in step S10, there is no specific sequence between the steps of fixing the negative electrode plate or the positive electrode plate on the steel plate and attaching the adhesive tape, that is, the negative electrode plate or the positive electrode plate can be firstly fixed on the steel plate, and then the adhesive tape can be attached to the side of the negative electrode plate containing the negative electrode active layer or the side of the positive electrode plate containing the positive electrode active layer, or alternatively, the adhesive tape can be firstly attached to the side of the negative electrode plate containing the negative electrode active layer or the side of the positive electrode plate containing the positive electrode active layer, and then the negative electrode plate or the positive electrode plate attached with the adhesive tape can be fixed on the steel plate with the other side of the negative electrode plate or the positive electrode plate as the contact side.

In a specific embodiment, the double-sided tape is NITTO.NO 5000NS, and the adhesive tape is green adhesive tape MD-XTG-620-2335L.

Step S20: a tensile machine is used to peel the adhesive tape from one end of the negative electrode plate or the positive electrode plate to the other end at 180°, and when the negative electrode active layer or the positive electrode active layer is transferred to the peeled adhesive tape, the value when the tension reading of the tension machine is in a stable state during the process is the cohesive force of the positive electrode active layer or the negative electrode active layer.

It should be noted that in the process of peeling the adhesive tape from one end of the negative electrode plate or the positive electrode plate to the other end at 180°, the negative electrode active layer or the positive electrode active layer serves as a tension bearing surface, and the main obstacle to be broken is the interaction force (i.e. cohesive force) between the material particles in the negative electrode active layer or the positive electrode active layer, so that the material particles can be transferred to the peeled adhesive tape, and thus the **negative** electrode active layer or the positive electrode active layer can be transferred to the peeled adhesive tape. During the peeling process, the tensile reading of the tensile machine fluctuates, and the tensile reading reaches a steady state when the cohesive force is overcome and the tensile curve no longer fluctuates. The tensile reading at this time reflects the cohesive force of the positive electrode active layer or the negative electrode active layer.

In a specific embodiment, the tensile machine is Poucette PT-307.

Specifically, in step S10, when an adhesive tape is attached to the side of the negative electrode plate containing the negative electrode active layer or the side of the positive electrode plate containing the positive electrode active layer, a section of unattached adhesive tape is reserved at one end of the negative electrode plate or the positive electrode plate, and in step S20, with the unattached adhesive tape as a tension bearing point, the adhesive tape is peeled from the end of the positive electrode plate or the negative electrode plate where the unattached adhesive tape is located to the other end at 180° by using a tension machine

In any embodiment of the present application, when the secondary battery described above is in an initial state, the positive electrode plate has a thickness of C1 µm, and the negative electrode plate has a thickness of D1 µm; and when the secondary battery is in a 100% SOC state after being charged and discharged for 100 cycles at a rate of 1 C at 25°C, the positive electrode plate has a thickness of C2 and the negative electrode plate has a thickness of D2.

The positive electrode plate has a thickness rebound rate T1 = (C2-C1)/C1, and the above negative electrode plate has a thickness rebound rate T2 = (D2-D1)/D1.

It should be understood that the thickness rebound rate T1 of the positive electrode plate or the thickness rebound rate T2 of the negative electrode plate is defined by the thickness change rate of the secondary battery from an initial state to a 100% SOC state after being charged and discharged for 100 cycles at a rate of 1 C at 25°C, and the initial state refers to the 0% SOC state after the secondary battery is assembled and formed.

The values of T1 and T2 may respectively indicate the expansion degrees of the positive electrode plate and the negative electrode plate during charging and discharging cycles of the secondary battery. The larger the values of T1 and T2, the greater the expansion degrees of the positive electrode plate and negative electrode plate during the charging and discharging cycles of the secondary battery.

The thickness rebound rate T1 of the positive electrode plate satisfies: 0.1 % ≤ T1 ≤ 10%, and the thickness rebound rate T2 of the negative electrode plate satisfies: 0.5 % ≤ T2 ≤ 15%.

In the present application, by controlling the ratio of the compacted density to the porosity of the positive electrode plate and the ratio of the compacted density to the porosity of the negative electrode plate, it is possible to reduce the thickness deformation of the positive electrode plate and the negative electrode plate caused by the expansion during charging and discharging cycles, that is, the thickness rebound rate of the positive electrode plate and the negative electrode plate during charging and discharging cycles is reduced, thereby reducing the volume expansion rate of the secondary battery, while allowing the electrode plate to have good infiltration by the electrolyte solution, and further improving the cycling performance of the secondary battery.

In any embodiment of the present application, the thickness rebound rate T1 of the positive electrode plate and the thickness rebound rate T2 of the negative electrode plate satisfy: 0.1 < T1/T2 < 2; and
optionally, the thickness rebound rate T1 of the positive electrode plate and the thickness rebound rate T2 of the negative electrode plate satisfy: 0.1 < T1/T2 < 1.5.

In any embodiment of the present application, the positive electrode active layer has a thickness of 5 µm - 300 µm; and
optionally, the positive electrode active layer has a thickness of 50 µm - 260 µm.

The thicker the active material layer of the electrode plate, the greater the amount of active material and binder used, the more side reactions of the active material during charging and discharging, and the stronger the swelling effect of the binder, which will eventually increase the thickness rebound rate of the electrode plate and make the active material too thick, such that the transmission kinetics of sodium ions or lithium ions decreases. Therefore, by controlling the thickness of the positive electrode active layer and the negative electrode active layer, the volume expansion rate of the secondary battery can be further reduced and the cycling performance of the secondary battery can be improved.

In the range of "5 µm - 300 µm", the values of thickness include the minimum and maximum values of the range, and each value between the minimum and maximum values. Specific examples include, but are not limited to, the point values in the embodiments and: 5 µm, 15 µm, 20 µm, 30 µm, 40 µm, 50 µm, 60 µm, 70 µm, 80 µm, 100 µm, 150 µm, 200 µm, 250 µm, and 300 µm.

Further, the ratio of the thickness of the positive electrode active layer to that of the negative electrode active layer is 0.5 - 1.8.

In any embodiment of the present application, the component of the positive electrode active layer comprises a positive electrode active material, and the mass proportion of the positive electrode active material in the positive electrode active layer is 50% - 99%; and
optionally, the mass proportion of the positive electrode active material in the positive electrode active layer is 70% - 98%.

On the one hand, when the mass proportion of the positive electrode active material in the positive electrode active layer increases, the side reactions will be deteriorated and the side reaction products will increase during charging and discharging of the secondary battery, which will lead to the aging of the electrode plate and the increase of the thickness rebound rate. On the other hand, if the mass proportion of the positive electrode active material in the positive electrode active layer is too low, it is not beneficial to improve the energy density. Therefore, by adjusting and controlling the mass proportion of the positive electrode active material in the positive electrode active layer, the cycling performance of the secondary battery can be further improved.

In some embodiments, the positive electrode active material can be a positive electrode active material known in the art for secondary batteries.

In any embodiment of the present application, the positive electrode active material comprises at least one of a lithium ion positive electrode active material and a sodium ion positive electrode active material.

As an example, the lithium ion positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), and LiNi_{0.8}Co_{0.1}Mn_{0.1}O₂ (also abbreviated as NCM811)), lithium nickel cobalt aluminum oxide (e.g., LiNi_{0.85}Co_{0.15}Al_{0.05}O₂), modified compounds thereof, and the like. Examples of lithium-containing phosphate of olivine structure may include, but are not limited to, at least one of lithium iron phosphate (e.g., LiFePO₄ (also referred to as LFP)), lithium manganese phosphate (e.g., LiMnPO₄), and lithium iron manganese phosphate.

In some embodiments, the active material in the first coated particle and/or the second coated particle has a molecular formula of LiFeₓMn₍₁₋ₓ₎PO₄, wherein x is any number from 0 to 1.

It should be understood that when x is 0, LiFeₓMn₍₁₋ₓ₎PO₄ is LiMnPO₄(lithium manganese phosphate), and when x is 1, LiFePO₄ is LiFePO₄(lithium iron phosphate).

As an example, the sodium ion active material may comprise at least one of the following materials: at least one of a sodium transition metal oxide, a polyanionic compound, and a Prussian blue compound. However, the present application is not limited to these materials, and other well known conventional materials that can be used as the positive electrode active material for sodium ion batteries may also be used.

In any embodiment of the present application, the positive electrode active material comprises at least one of a sodium transition metal oxide, a polyanionic compound and a Prussian blue compound; and
optionally, the positive electrode active material comprises at least one of a sodium transition metal oxide and a polyanionic compound.

The sodium transition metal oxide has a layered transition metal structure. Compared with the rhombic phase of the Prussian blue compound, the thickness rebound rate of the sodium transition metal oxide having a layered transition metal structure will be higher in theory. However, in practical application, the Prussian blue compound is easy to absorb water to form crystal water and vacancy defects, which leads to an increase in thickness rebound rate and even the collapse of the structure. Therefore, when the sodium transition metal oxide is used as the positive electrode active material, the thickness rebound rate of the positive electrode plate is actually smaller.

The anionic structural units in the polyanionic compound are covalently bonded to form a three-dimensional structure, which has good structural stability, and when the polyanionic compound is used as the positive electrode active material, the thickness rebound rate of the positive electrode plate is smaller.

As an optional technical solution of the present application, in the sodium transition metal oxide, the transition metal at least includes at least one of Mn, Fe, Ni, Co, Cr, Cu, Ti, Zn, V, Zr, and Ce. The sodium transition metal oxide is for example NaₓMO₂, wherein M at least includes at least one or more of Ti, V, Mn, Co, Ni, Fe, Cr, and Cu, and 0 < x ≤ 1.

As an optional technical solution of the present application, the polyanionic compound may be a class of compounds with sodium ions, transition metal ions and tetrahedral (YO₄)ⁿ⁻ anionic units, wherein the transition metal at least includes at least one of Mn, Fe, Ni, Co, Cr, Cu, Ti, Zn, V, Zr, and Ce; Y at least includes at least one of P, S and Si; and n represents the valence of (YO₄)ⁿ⁻.

The polyanionic compound may also be a class of compounds with sodium ions, transition metal ions, tetrahedral (YO₄)ⁿ⁻ anionic units, and halogen anions, wherein the transition metal at least includes at least one of Mn, Fe, Ni, Co, Cr, Cu, Ti, Zn, V, Zr, and Ce; Y at least includes at least one of P, S and Si; n represents the valence of (YO₄)ⁿ⁻; and the halogen may be at least one of F, Cl and Br.

The polyanionic compound may also be a class of compounds with sodium ion, tetrahedral (YO₄)ⁿ⁻ anionic units, polyhedral units (ZO_{y})^{m+}, and optional halogen anions, wherein Y at least includes at least one of P, S and Si; n represents the valence of (YO₄)ⁿ⁻; Z represents a transition metal, at least including at least one of Mn, Fe, Ni, Co, Cr, Cu, Ti, Zn, V, Zr, and Ce, and m represents the valence of (ZO_{y})^{m+}; and the halogen may be at least one of F, Cl and Br.

The polyanionic compound is for example, at least one of NaFePO₄, Na₃V₂(PO₄)₃ (sodium vanadium phosphate, abbreviated as NVP), Na₄Fe₃(PO₄)₂(P₂O₇), NaM'PO₄F (M' is one or more of V, Fe, Mn and Ni), and Na₃(VO_{y})₂(PO₄)₂F_{3-2y}(0 ≤ y ≤ 1).

The Prussian blue compound may be a class of compounds with sodium ions, transition metal ions and cyanide ions (CN⁻), wherein the transition metal at least includes at least one of Mn, Fe, Ni, Co, Cr, Cu, Ti, Zn, V, Zr, and Ce. The Prussian blue compound is for example NaₐMe_{b}Me'_{c}(CN)₆, wherein Me and Me' each independently at least include at least one of Ni, Cu, Fe, Mn, Co, and Zn, 0 < a ≤ 2, 0 < b < 1, and 0 < c < 1.

In any embodiment of the present application, the component of the positive electrode active layer comprises a positive electrode binder, and the mass proportion of the positive electrode binder in the positive electrode active layer is 0.05% - 10%; and
optionally, the mass proportion of the positive electrode binder in the positive electrode active layer is 0.1%-8%.

During charging and discharging cycles of the secondary battery, the positive electrode binder will swell, thus increasing the thickness rebound rate of the positive electrode plate. However, if the mass proportion of the positive electrode binder in the positive electrode active layer is too low, the problems such as insufficient adhesion of the positive electrode active layer will occur. Therefore, by adjusting and controlling the mass proportion of the positive electrode binder in the positive electrode active layer, the cycling performance of the secondary battery can be further ensured.

The positive electrode binder can be various binders commonly used in the art. As an example, the positive electrode binder includes at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluoroacrylate resin, sodium carboxymethyl cellulose, hydroxypropyl cellulose, sodium hydroxymethylcellulose, potassium hydroxymethylcellulose, diacetyl cellulose, polyacrylic acid, sodium alginate, styrene-butadiene rubber, acrylic butadiene rubber, polypyrrole, polyaniline, epoxy resin and guar gum.

In any embodiment of the present application, the positive electrode binder includes at least one of sodium carboxymethyl cellulose, hydroxypropyl cellulose, sodium hydroxymethylcellulose, potassium hydroxymethylcellulose, diacetyl cellulose, polyacrylic acid, sodium alginate, styrene-butadiene rubber, acrylic butadiene rubber, polypyrrole, polyaniline, epoxy resin and guar gum. Such binders have a low swelling rate, which can further reduce the thickness rebound rate of the positive electrode plate.

In any embodiment of the present application, the component of the positive electrode active layer further comprises a positive electrode conductive agent, and the mass proportion of the positive electrode conductive agent in the positive electrode active layer is 0.05% - 8%; and
optionally, the mass proportion of the positive electrode conductive agent in the positive electrode active layer is 0.1% - 6%.

As an example, the positive electrode conductive agent may comprise at least one of superconducting carbon, acetylene black, carbon black, Ketjen black, carbon dots, carbon nanotubes, graphene, and carbon nanofibers.

In any embodiment of the present application, the positive electrode plate further comprises a positive electrode current collector, and the positive electrode active layer is loaded on at least one surface of the positive electrode current collector.

The positive electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the positive electrode plate can be prepared as follows: dispersing the above-mentioned components for preparing the positive electrode plate, such as a positive electrode active material, a positive electrode conductive agent, a positive electrode binder and any other components, in a solvent (e.g., N-methyl pyrrolidone) to form a positive electrode slurry; and coating the positive electrode slurry onto a positive electrode current collector, followed by the procedures such as drying and cold pressing, so as to obtain the positive electrode plate.

In any embodiment of the present application, the component of the negative electrode active layer comprises a negative electrode active material, and the mass proportion of the negative electrode active material in the negative electrode active layer is 85% - 99%; and
optionally, the mass proportion of the negative electrode active material in the negative electrode active layer is 90% - 99%.

The negative electrode active material may be a carbon material well known in the art for secondary batteries. As an example, in some embodiments, the negative electrode active material comprises at least one of carbon nanotubes, graphite, graphene, carbon fibers, mesocarbon microspheres, glassy carbon, soft carbon, and hard carbon. Graphite includes at least one of artificial graphite and natural graphite, and specifically, graphite may be expanded graphite, highly oriented graphite, three-dimensional graphite, etc. However, the present application is not limited to these materials. The negative electrode active materials may be used alone or in combination of two or more.

In any embodiment of the present application, the negative electrode active material comprises at least one of mesocarbon microspheres, graphite, glassy carbon, carbon nanotubes, carbon-carbon composite materials, carbon fibers, hard carbon, soft carbon and alloy materials;

In some embodiments, the negative electrode active material is hard carbon.

Due to the irregular layered structure of hard carbon, when it is used as the negative electrode active material to prepare the negative electrode plate, the negative electrode plate has a low thickness rebound rate.

In any embodiment of the present application, the component of the negative electrode active layer comprises a negative electrode binder, and the mass proportion of the negative electrode binder in the negative electrode active layer is 0.1% - 10%.

The negative electrode binder includes at least one of sodium carboxymethyl cellulose, hydroxypropyl cellulose, sodium hydroxymethylcellulose, potassium hydroxymethylcellulose, diacetyl cellulose, polyacrylic acid, sodium alginate, styrene-butadiene rubber, acrylic butadiene rubber, polypyrrole, polyaniline, epoxy resin and guar gum. Such binders have a low swelling rate, which can further reduce the thickness rebound rate of the negative electrode plate.

In any embodiment of the present application, the component of the negative electrode active layer further comprises a negative electrode conductive agent, and the mass proportion of the negative electrode conductive agent in the negative electrode active layer is 0.1% - 10%; and
optionally, the mass proportion of the negative electrode conductive agent in the negative electrode active layer is 0.15% - 8%.

As an example, the negative electrode conductive agent may comprise at least one of superconducting carbon, acetylene black, carbon black, Ketjen black, carbon dots, carbon nanotubes, graphene, and carbon nanofibers.

In any embodiment of the present application, the negative electrode plate further comprises a negative electrode current collector, and the negative electrode active layer is loaded on at least one surface of the negative electrode current collector.

The negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode plate can be prepared as follows: dispersing the above-mentioned components for preparing the negative electrode plate, such as a negative electrode active material, a negative electrode conductive agent, a negative electrode binder and any other components, in a solvent (e.g., N-methyl pyrrolidone) to form a negative electrode slurry; and coating the negative electrode slurry onto a negative electrode current collector, followed by the procedures such as drying and cold pressing, so as to obtain the negative electrode plate.

In some embodiments, the secondary battery further comprises a separator and an electrolyte solution.

The positive electrode plate, the negative electrode plate, and the separator may be subjected to a winding process or a laminating process to form an electrode assembly. The electrolyte solution functions to conduct ions between the positive electrode and the negative electrode.

The electrolyte solution may comprise an electrolyte salt and a solvent. As an example, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP), and lithium tetrafluorooxalate phosphate (LiTFOP).

As an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further comprise an additive. For example, the additive may comprise a negative electrode film-forming additive, or may also comprise a positive electrode film-forming additive, or may also comprise an additive that may improve certain properties of a battery, such as an additive that improves the overcharge performance of a battery, an additive that improves the high-temperature performance of a battery, and an additive that improves the low-temperature performance of a battery.

The type of the separator is not particularly limited in the present application, and any well known porous-structure separator with good chemical stability and mechanical stability may be selected.

In some embodiments, the material of the separator can be selected from at least one of glass fibers, a nonwoven, polyethylene, polypropylene and polyvinylidene fluoride, and also can be a separator with a boehmite coating, that is, a separator comprising a porous substrate and a boehmite coating loaded on the surface of the porous substrate. The separator may be either a single-layer film or a multi-layer composite film, and is not limited particularly. When the separator is a multi-layer composite film, the materials in the respective layers may be same or different, which is not limited particularly.

The thickness of the separator is controlled at 2 µm - 15 µm; and optionally, the thickness of the separator is controlled at 2 µm - 13 µm.

In some embodiments, the secondary battery of the present application is a lithium ion secondary battery or a sodium ion secondary battery.

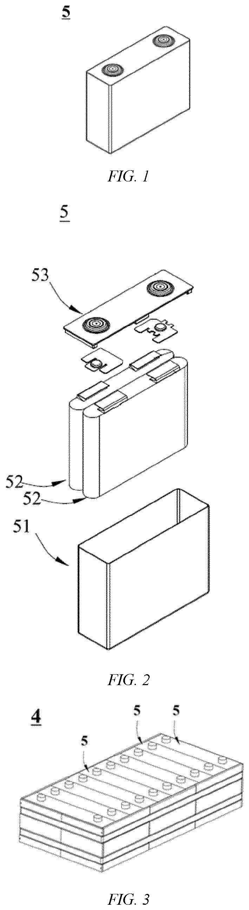

The secondary battery may be prepared according to a conventional method in the art, for example, by winding (or laminating) a positive electrode plate, a separator, and a negative electrode plate in sequence, such that the separator is located between the positive electrode plate and the negative electrode plate and functions for isolation, thereby obtaining a battery cell, placing the battery cell in an outer package, injecting an electrolyte solution, and sealing the outer package to obtain the secondary battery. In the embodiments of the present application, the shape of the secondary battery is not particularly limited and may be a cylindrical shape, a square shape, or any other shape. Fig. 1 shows a secondary battery 5 with a square structure as an example.

In some embodiments, the secondary battery may comprise an outer package. The outer package is used for packaging the positive electrode plate, the negative electrode plate and the electrolyte solution.

In some embodiments, referring to Fig. 2, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity.

The positive electrode plate, the negative electrode plate, and the separator may be subjected to a winding process or a laminating process to form an electrode assembly 52. The electrode assembly 52 is packaged in the accommodating cavity. An electrolyte solution is infiltrated into the electrode assembly 52. The number of the electrode assemblies 52 contained in the secondary battery 5 may be one or more, and may be adjusted according to requirements.

In some embodiments, the outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be a plastic and may include, for example, one or more of polypropylene (PP), polybutylene terephthalate (PBT), polybutylene succinate (PBS), etc.

In some embodiments, the secondary battery may be assembled into a battery module, and the number of the secondary batteries contained in the battery module may be multiple, and the specific number may be adjusted according to the application and capacity of the battery module.

Fig. 3 shows a battery module 4 as an example. In the battery module 4, a plurality of secondary batteries 5 may be arranged sequentially along the length direction of the battery module 4. Apparently, the secondary batteries may also be arranged in any other manner. Furthermore, the plurality of secondary batteries 5 may be fixed by fasteners.

Optionally, the battery module 4 may further comprise a housing having an accommodating space in which the plurality of secondary batteries 5 are accommodated.

In some embodiments, the above battery module may also be assembled into a battery pack, and the number of the battery modules contained in the battery pack may be adjusted according to the application and capacity of the battery pack.

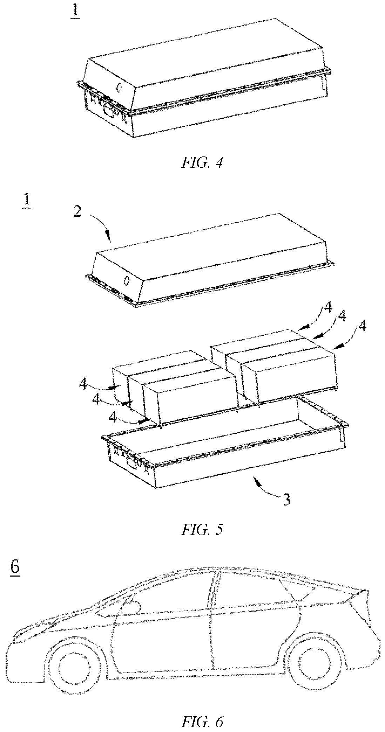

Fig. 4 and Fig. 5 show a battery pack 1 as an example. The battery pack 1 may comprise a battery box and a plurality of battery modules 4 arranged in the battery box. The battery box comprises an upper box body 2 and a lower box body 3, wherein the upper box body 2 can cover the lower box body 3 to form a closed space for accommodating the battery modules 4. The plurality of battery units 4 may be arranged in the battery box in any manner.

The present application further provides a power consuming device, comprising at least one of the secondary battery, the battery module, or the battery pack described above.

The secondary battery, the battery module or the battery pack described above may be used as a power source or an energy storage unit of the power consuming device.

The power consuming device may be, but is not limited to, a mobile device (e.g., a mobile phone, and a laptop computer), an electric vehicle (e.g., a pure electric vehicle, a hybrid electric vehicle, a plug-in hybrid electric vehicle, an electric bicycle, an electric scooter, an electric golf cart, and an electric truck), an electric train, a ship and a satellite, an energy storage system, etc.

A secondary battery, battery module or battery pack may be used for the power consuming device according to the usage requirements thereof.

Fig. 6 shows a power consuming device 6 as an example. The power consuming device 6 may be a pure electric vehicle, a hybrid electric vehicle, a plug-in hybrid electric vehicle, etc. In order to meet the requirements of the power consuming device 6 for a high power and a high energy density of a secondary battery, a battery pack or a battery module may be used.

As another example, the power consuming device may be a mobile phone, a tablet computer, a laptop computer, etc. The device is generally required to be thin and light, and may use a secondary battery as a power source.

### Detailed Description of Embodiments

### Example 1

### (1) Preparation of positive electrode plate

A positive electrode active material of Prussian blue material of NaNi_{1/3}Fe_{1/3}Mn_{1/3}O₂, a conductive agent of multi-walled carbon nanotubes, a binder of polyvinylidene fluoride (PVDF) were uniformly mixed with an organic solvent of N-methylpyrrolidone (NMP) in a mass ratio of 90 : 5 : 5 to prepare a positive electrode slurry, in which the mass content of the binder in the positive electrode slurry was 1 wt%; and then the positive electrode slurry was uniformly coated on a positive electrode current collector of an aluminum foil, dried and then a positive electrode active layer was formed to obtain a prefabricated electrode plate, followed by cold pressing and slitting, so as to obtain the positive electrode plate. During the preparation of the positive electrode plate, by controlling the process parameters such as the solid content and viscosity of the positive electrode slurry and the pressure during cold pressing, the porosity and compacted density of the positive electrode active material layer of the positive electrode plate were adjusted to reach the target value.

In the positive electrode active layer, the mass proportion of the positive electrode active material was denoted as E1, and the mass proportion of the binder was denoted as F1, see Table 1 for details.

The porosity and compacted density of the positive electrode active layer of the positive electrode plate were tested, and the compacted density of the positive electrode active layer was denoted as A1 g/cm³, and the porosity was denoted as B1, see Table 1 for specific results.

### (2) Preparation of negative electrode plate

A negative electrode active material of hard carbon, a binder of styrene-butadiene rubber (SBR), a conductive agent of carbon black were uniformly mixed with a solvent of deionized water in a mass ratio of 90 : 5 : 5 to prepare a negative electrode slurry; and then the negative electrode slurry was coated on a negative electrode current collector of a copper foil, dried and then a negative electrode active layer was formed, followed by cold pressing and slitting, so as to obtain the negative electrode plate. Identically, during the preparation of the negative electrode plate, by controlling the process parameters such as the solid content and viscosity of the negative electrode slurry and the pressure during cold pressing, the porosity and compacted density of the negative electrode active material layer of the negative electrode plate were adjusted to reach the target value.

In the negative electrode active layer, the mass proportion of the negative electrode active material was denoted as E2, and the mass proportion of the binder was denoted as F2, see Table 1 for specific results.

The porosity and compacted density of the negative electrode active layer of the negative electrode plate were tested, and the compacted density of the negative electrode active layer was denoted as A2 g/cm³, and the porosity was denoted as B2, see Table 1 for specific results.

### (3) Preparation of electrolyte solution

In an argon atmosphere glove box (H₂O < 0.1 ppm, O₂ < 0.1 ppm), ethylene carbonate (EC) and propylene carbonate (PC) were mixed in a volume ratio of 1 : 1 to obtain a mixed organic solvent, and then a fully dried sodium salt of NaClO₄ was dissolved in the mixed organic solvent to obtain an electrolyte solution, wherein the concentration of NaClO₄ was 1 mol/L.

### (4) Preparation of separator

A conventional polypropylene (PP) film is used as the separator.

### (5) Preparation of sodium ion battery

The positive electrode plate, negative electrode plate and separator obtained in steps (1), (2) and (4) were wound and packaged into a packaging shell, and then the electrolyte solution obtained in step (3) was injected therein, followed by the processes such as formation and standing to obtain the sodium ion battery.

The porosity, compacted density, thickness, cohesive force, thickness rebound rate of the active layer of the electrode plate and the capacity retention rate of the sodium ion battery were tested as follows:
1) porosity has a meaning well known in the art, and can be tested by methods known in the art. Specifically, the porosity of the positive electrode active layer of the positive electrode plate or the negative electrode active layer of the negative electrode plate was tested by referring to the determination method of apparent density, true density and porosity of iron ore in GB/T 24586-2009. Specifically, AccuPyc II 1340-type full-automatic true density tester from Micromeritics Compan, USA was used, and nitrogen was used as an adsorption medium for testing. The test sample was an electrode plate coated with active material layers on both sides.
2) The compacted density of the positive electrode active layer of the positive electrode plate or the negative electrode active layer of the negative electrode plate has a meaning well known in the art, and can be tested by methods known in the art. Specifically: firstly, 30 small pieces of current collector with an area of S were cut, the weights and thicknesses thereof were measured respectively, and the average weight m1 and the average thickness H1 were obtained by calculation, then 30 small pieces of electrode plate with an area of S were cut, and the average weight m2 and the average thickness H2 were obtained, compacted density = (m2 - m1)/((H2 - H1) × S).
3) The thickness of the active layer of the electrode plate can be measured by methods known in the art, and can be measured by any thickness meter, micrometer and other instruments. As an example, the test can be carried out by the step profiler test method: a probe of a step profiler gently slided across the surface of a sample with a very tiny force, ups and downs on the micro- or even nano-level on the surface of the sample were amplified by millions of times by means of a sensor connected to the probe and then converted into an electronic signal, and the electronic signal was input into a computer software and finally displayed in the form of digital and graphic data.
4) Test for cohesive force The electrode plate was cut into a sample with a rectangular shape of 2 cm × 5 cm, one side of the electrode plate was fixed on the steel plate by double-sided tape (NITTO.NO 5000NS), and the side of the electrode plate containing the active layer was attached with a green adhesive tape (MD-XTG-620-2335L), and a section of unattached adhesive tape was reserved at one end of the electrode plate. Poucette PT-307 was used to peel the green adhesive tape from one end of the electrode plate to the other end at 180° through the end of unattached green adhesive tape, and the surface of the peeled green adhesive tape was observed. If a complete active layer was remained, the value of tensile force after the tensile reading of the tensile machine was stable at this time was the cohesive force of the electrode plate. The cohesive force of the positive electrode plate was recorded as Q1 (N/m), and the cohesive force of the negative electrode plate was recorded as Q2 (N/m). See Table 2 for details.
5) Test for capacity retention rate of sodium ion battery

A freshly prepared sodium ion battery was fully discharged, then charged to 100% SOC, and then fully discharged to the lower limit voltage of 0% SOC, and the initial discharge capacity CapO of the battery at this time was recorded; and then, after being charged and discharged for 100 cycles at a rate of 1 C at 25°C, the battery was fully discharged to the lower limit voltage of 0% SOC, and the discharge capacity Cap1 of the sodium ion battery at the 100th cycle was recorded, and thus the capacity retention rate of the sodium ion battery was calculated to be K = (Cap1 - Cap0)/Cap0 × 100%. See Table 2 for specific results.

### 6) Test for rebound rate of electrode plate

10 sodium ion batteries from the same batch and in the same SOH state (healthy state) were fully discharged to the lower limit voltage of 0% SOC, and then any five sodium ion batteries were disassembled, and the thicknesses of the positive and negative electrode plates in each battery were measured, respectively, and the averages of the thicknesses of the positive and negative electrode plates of the five sodium ion batteries were calculated and recorded as C1 and D1, respectively;
the remaining five sodium ion batteries were charged and discharged for 100 cycles at a rate of 1 C at 25°C, and then disassembled after fully charged to a state of 100% SOC, and the thicknesses of the positive and negative electrode plates in each battery were measured, respectively, and the averages of the thicknesses of the positive and negative electrode plates of the five sodium ion batteries were calculated and recorded as C2 and D2, respectively;
the rebound rate of the positive electrode plate T1 = (C2 - C1)/C1; and
the rebound rate of the negative electrode plate T2 = (D2 - D1)/C1; and see Table 2 for specific results.

### Examples 2-7

Examples 2-7 were basically the same as example 1, provided that the thickness of one side of the positive electrode active material layer was kept unchanged, except that in step (1), the process parameters such as the solid content and viscosity of the positive electrode slurry and the pressure during cold pressing were adjusted, such that the compacted density A1, the porosity B1, or the ratio of the two of the positive electrode active layer in the positive electrode plate were adjusted to be different from those in Example 1, and
the remaining steps were the same as in example 1, see Table 1 for specific parameters and test results.

### Examples 8-12

Examples 8-12 were basically the same as example 1, provided that the thickness of one side of the negative electrode active material layer was kept unchanged, except that in step (2), the process parameters such as the solid content and viscosity of the negative electrode slurry and the pressure during cold pressing were adjusted, such that the compacted density A2, or the porosity B2, or the ratio of the two of the negative electrode active layer in the negative electrode plate were adjusted to be different from those in example 1, and the remaining steps were the same as in Example 1, see Table 1 for specific parameters and test results.

### Examples 13-14

Examples 13-14 were basically the same as example 1, except that in step (1), the compacted density A1, or the porosity B1 of the positive electrode active layer in the positive electrode plate were different from those in example 1, and
the remaining steps were the same as in example 1, see Table 1 for specific parameters and test results.

### Examples 15-18

Examples 15-18 were basically the same as example 1, except that in step (1), the cohesive force of the positive electrode active layer in the positive electrode plate was adjusted and controlled to be different from that in example 1, and
the remaining steps were the same as in example 1, see Table 1 for specific parameters and test results.

### Examples 19-23

Examples 15-18 were basically the same as example 1, except that in step (2), the cohesive force of the negative electrode active layer in the negative electrode plate was adjusted and controlled to be different from those in example 1, and
the remaining steps were the same as in example 1, see Table 1 for specific parameters and test results.

### Comparative examples 1-2

Comparative examples 1-2 were basically the same as example 1, except that in step (1), the compacted density A1, the porosity B1, or the ratio of two of the positive electrode active layer in the positive electrode plate were different from those in example 1, and
the remaining steps were the same as in example 1, see Table 1 for specific parameters and test results.

### Comparative examples 3-4

Comparative examples 3-4 were basically the same as example 1, except that in step (2), the compacted density A2, the porosity B2, or the ratio of two of the negative electrode active layer in the negative electrode plate were different from those in example 1, and
the remaining steps were the same as in example 1, see Table 1 for specific parameters and test results. See Tables 1 and 2 for the relevant parameters and the test results of examples and comparative examples.

**Table 1**

| | A1 | B1 | A1/B1 | A2 | B2 | A2/B2 | E1 | E2 | F1 | F2 |
|---|---|---|---|---|---|---|---|---|---|---|
| Example 1 | 1.8 | 40% | 4.5 | 1 | 30% | 3.3 | 90% | 90% | 5% | 5% |
| Example 2 | 1.5 | 43% | 3.5 | 1 | 30% | 3.3 | 90% | 90% | 5% | 5% |
| Example 3 | 1.2 | 60% | 2 | 1 | 30% | 3.3 | 90% | 90% | 5% | 5% |
| Example 4 | 1.1 | 61% | 1.8 | 1 | 30% | 3.3 | 90% | 90% | 5% | 5% |
| Example 5 | 3.4 | 49% | 7 | 1 | 30% | 3.3 | 90% | 90% | 5% | 5% |
| Example 6 | 3.5 | 35% | 10 | 1 | 30% | 3.3 | 90% | 90% | 5% | 5% |
| Example 7 | 3.6 | 30% | 12 | 1 | 30% | 3.3 | 90% | 90% | 5% | 5% |
| Example 8 | 1.8 | 40% | 4.5 | 0.8 | 50% | 1.6 | 90% | 90% | 5% | 5% |
| Example 9 | 1.8 | 40% | 4.5 | 0.9 | 67% | 1.3 | 90% | 90% | 5% | 5% |
| Example 10 | 1.8 | 40% | 4.5 | 1.05 | 30% | 3.5 | 90% | 90% | 5% | 5% |
| Example 11 | 1.8 | 40% | 4.5 | 1.2 | 67% | 1.8 | 90% | 90% | 5% | 5% |
| Example 12 | 1.8 | 40% | 4.5 | 1.3 | 25% | 15.2 | 90% | 90% | 5% | 5% |
| Example 13 | 3.1 | 69% | 4.5 | 1 | 30% | 3.3 | 90% | 90% | 5% | 5% |
| Example 14 | 1.1 | 24% | 4.5 | 1 | 30% | 3.3 | 90% | 90% | 5% | 5% |
| Example 15 | 1.8 | 40% | 4.5 | 1 | 30% | 3.3 | 89% | 90% | 6% | 5% |
| Example 16 | 1.8 | 40% | 4.5 | 1 | 30% | 3.3 | 87% | 90% | 8% | 5% |
| Example 17 | 1.8 | 40% | 4.5 | 1 | 30% | 3.3 | 94% | 90% | 1% | 5% |
| Example 18 | 1.8 | 40% | 4.5 | 1 | 30% | 3.3 | 85% | 90% | 10% | 5% |
| Example 19 | 1.8 | 40% | 4.5 | 1 | 30% | 3.3 | 90% | 90% | 5% | 5% |
| Example 20 | 1.8 | 40% | 4.5 | 1 | 30% | 3.3 | 88% | 90% | 5% | 5% |
| Example 21 | 1.8 | 40% | 4.5 | 1 | 30% | 3.3 | 90% | 90% | 5% | 5% |
| Example 22 | 1.8 | 40% | 4.5 | 1 | 30% | 3.3 | 90% | 90% | 5% | 5% |
| Example 23 | 1.8 | 40% | 4.5 | 1 | 30% | 3.3 | 90% | 90% | 5% | 5% |
| Comparative example 1 | 3.5 | 25% | 14.0 | 1 | 30% | 3.3 | 90% | 90% | 5% | 5% |
| Comparative | 0.5 | 65% | 0.8 | 1 | 30% | 3.3 | 90% | 90% | 5% | 5% |
| example 2 | | | | | | | | | | |
| Comparative example 3 | 1.8 | 40% | 4.5 | 0.35 | 70% | 0.5 | 90% | 90% | 5% | 5% |
| Comparative example 4 | 1.8 | 40% | 4.5 | 1.7 | 20% | 8.5 | 90% | 90% | 5% | 5% |

**Table 2**

| | C1 (µm) | D1 (µm) | T1 | T2 | T1/T2 | Q1 | Q2 | K |
|---|---|---|---|---|---|---|---|---|
| Example 1 | 260 | 260 | 3% | 5% | 0.60 | 300 | 150 | 95% |
| Example 2 | 312 | 260 | 2.8% | 5% | 0.60 | 280 | 150 | 93% |
| Example 3 | 390 | 260 | 2.6% | 5% | 0.40 | 260 | 150 | 92% |
| Example 4 | 425 | 260 | 1.2% | 5% | 0.40 | 240 | 150 | 90% |
| Example 5 | 138 | 260 | 3.6% | 5% | 1.00 | 380 | 150 | 85% |
| Example 6 | 134 | 260 | 3.8% | 5% | 1.00 | 390 | 150 | 83% |
| Example 7 | 130 | 260 | 4% | 5% | 1.00 | 400 | 150 | 80% |
| Example 8 | 260 | 325 | 3.08% | 3.4% | 0.90 | 300 | 129 | 93% |
| Example 9 | 260 | 289 | 3.08% | 2.2% | 0.7 | 300 | 144 | 91% |
| Example 10 | 260 | 247 | 3.08% | 6.3% | 0.60 | 300 | 168 | 88% |
| Example 11 | 260 | 217 | 3.08% | 4.2% | 0.60 | 300 | 195 | 94% |
| Example 12 | 260 | 200 | 3.08% | 7.5% | 0.40 | 300 | 210 | 85% |
| Example 13 | 151 | 260 | 6.95% | 5% | 1.4 | 360 | 150 | 80% |
| Example 14 | 425 | 260 | 0.96% | 5% | 0.2 | 230 | 150 | 82% |
| Example 15 | 260 | 260 | 3.6% | 5% | 0.70 | 250 | 50 | 93% |
| Example 16 | 260 | 260 | 6.2% | 5% | 1.2 | 400 | 50 | 83% |
| Example 17 | 260 | 260 | 5.8% | 5% | 1.2 | 50 | 50 | 73% |
| Example 18 | 260 | 260 | 8.5% | 5% | 1.7 | 450 | 50 | 81% |
| Example 19 | 500 | 450 | 3% | 8% | 0.375 | 300 | 93 | 63% |
| Example 20 | 150 | 150 | 3.33% | 5% | 0.70 | 600 | 210 | 85% |
| Example 21 | 450 | 450 | 4% | 7% | 0.60 | 300 | 90 | 60% |
| Example 22 | 800 | 800 | 5% | 12% | 0.40 | 220 | 75 | 45% |
| Example 23 | 1000 | 1000 | 7% | 15% | 0.50 | 200 | 60 | 40% |
| Comparative example 1 | 260 | 260 | 5.77% | 5% | 1.15 | 380 | 150 | 47% |
| Comparative example 2 | 260 | 260 | 0.2% | 5% | 0.04 | 200 | 150 | 55% |
| Comparative example 3 | 260 | 743 | 3% | 0.9% | 1.0 | 300 | 60 | 52% |
| Comparative example 4 | 260 | 153 | 3% | 8% | 0.38 | 300 | 240 | 43% |

It can be seen from the analysis in Tables 1 and 2 that in the secondary battery of the present application, by adjusting the ratio of the compacted density to the porosity of the positive electrode plate and the ratio of the compacted density to the porosity of the negative electrode plate, the thickness rebound rate of the positive electrode plate and the negative electrode plate during charging and discharging cycles can be reduced, thereby reducing the volume expansion rate of the secondary battery and further improving the cycling performance thereof.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A secondary battery, **characterized by** comprising a positive electrode plate and a negative electrode plate, wherein the positive electrode plate comprises a positive electrode active layer, and the negative electrode plate comprises a negative electrode active layer;
wherein the positive electrode active layer has a compacted density of A1 g/cm³ and a porosity of B1, and the positive electrode active layer satisfies: 1.8 ≤ A1/B1 ≤ 12; and
the negative electrode active layer has a compacted density of A2 g/cm³ and a porosity of B2, and the negative electrode active layer satisfies: 1 ≤ A2/B2 ≤ 8.

2. The secondary battery of claim 1, **characterized in that** the positive electrode active layer satisfies: 2 ≤ A1/B1 ≤ 10, and the negative electrode active layer satisfies: 1.2 ≤ A2/B2 ≤ 7.

3. The secondary battery of either of claims 1-2, **characterized in that** 1.1 ≤ A1 ≤ 3.6;
optionally, 1.2 ≤ A1 ≤ 3.6.

4. The secondary battery of any one of claims 1-3, **characterized in that** 10% ≤ B1 ≤ 60%; optionally, 20% ≤ B1 ≤ 50%.

5. The secondary battery of any one of claims 1-4, **characterized in that** 0.7 ≤ A2 ≤ 1.3; optionally, 0.8 ≤ A2 ≤ 1.3.

6. The secondary battery of any one of claims 1-5, **characterized in that** 20% ≤ B2 ≤ 55%; optionally, 20% ≤ B2 ≤ 50%.

7. The secondary battery of any one of claims 1-6, **characterized in that** the positive electrode active layer has a cohesive force of 20 N/m - 600 N/m; and
the negative electrode active layer has a cohesive force of 50 N/m - 600 N/m.

8. The secondary battery of any one of claims 1-7, **characterized in that** when the secondary battery is in an initial state, the positive electrode plate has a thickness of C1 µm and the negative electrode plate has a thickness of D1 µm, and when the secondary battery is in a 100% SOC state after being charged and discharged for 300 cycles at a rate of 1 C at 25°C, the positive electrode plate has a thickness of C2 µm and the negative electrode plate has a thickness of D2 µm;
the positive electrode plate has a thickness rebound rate T1 = (C2 - C1)/C1 × 100%, and the negative electrode plate has a thickness rebound rate T2 = (D2 - D1)/D1 × 100%;
the thickness rebound rate T1 of the positive electrode plate satisfies: 0.1 % ≤ T1 ≤ 10%, and the thickness rebound rate T2 of the negative electrode plate satisfies: 0.5 % ≤ T2 ≤ 15%.

9. The secondary battery of claim 8, **characterized in that** the thickness rebound rate T1 of the positive electrode plate and the thickness rebound rate T2 of the negative electrode plate satisfy: 0.1 < T1/T2 < 2; and
optionally, the thickness rebound rate T1 of the positive electrode plate and the thickness rebound rate T2 of the negative electrode plate satisfy: 0.1 < T1/T2 < 1.5.

10. The secondary battery of any one of claims 1-9, **characterized in that** the component of the positive electrode active layer comprises a positive electrode active material, and the mass proportion of the positive electrode active material in the positive electrode active layer is 50% - 99%; and
optionally, the mass proportion of the positive electrode active material in the positive electrode active layer is 70% - 98%.

11. The secondary battery of claim 10, **characterized in that** the positive electrode active material comprises at least one of a lithium ion positive electrode active material and a sodium ion positive electrode active material.

12. The secondary battery of either of claims 10-11, **characterized in that** the positive electrode active material comprises at least one of a sodium transition metal oxide, a polyanionic compound and a Prussian blue compound; and
optionally, the positive electrode active material comprises at least one of a sodium transition metal oxide and a polyanionic compound.

13. The secondary battery of any one of claims 1-12, **characterized in that** the component of the negative electrode active layer comprises a negative electrode active material, and the mass proportion of the negative electrode active material in the negative electrode active layer is 85% - 99%; and
optionally, the mass proportion of the negative electrode active material in the negative electrode active layer is 90% - 99%.

14. The secondary battery of claim 13, **characterized in that** the negative electrode active material comprises at least one of mesocarbon microspheres, graphite, glassy carbon, carbon nanotubes, carbon-carbon composite materials, carbon fibers, hard carbon, soft carbon and alloy materials; and
optionally, the negative electrode active material comprises hard carbon.

15. The secondary battery of any one of claims 1-14, **characterized in that** the component of the positive electrode active layer comprises a positive electrode binder, and the mass proportion of the positive electrode binder in the positive electrode active layer is 0.05% - 10%; and
optionally, the mass proportion of the positive electrode binder in the positive electrode active layer is 0.1% - 8%.

16. The secondary battery of any one of claims 1-15, **characterized in that** the component of the negative electrode active layer comprises a negative electrode binder, and the mass proportion of the negative electrode binder in the negative electrode active layer is 0.1% - 10%.

17. The secondary battery of any one of claims 1-16, **characterized in that** the positive electrode active layer has a thickness of 5 µm - 300 µm; and
optionally, the positive electrode active layer has a thickness of 50 µm - 260 µm.

18. A battery module, **characterized by** comprising a secondary battery of any one of claims 1-17.

19. A battery pack, **characterized by** comprising a battery module of claim 18.

20. A power consuming device, **characterized by** comprising at least one of a secondary battery of any one of claims 1-17, a battery module of claim 18, and a battery pack of claim 19.
